# EUROPEAN PATENT APPLICATION

(11) **EP 1 378 338 A1**
(43) Date of publication of application: **07.01.2004**
(21) Application number: 02077621.7
(22) Date of filing: 03.07.2002
(51) Int. Cl.: B29C 70/48, B29C 70/44

(54) **A method and a moulding device for the manufacture of composite products in a closed mould process wherein the mould comprises an inner liner and an inner liner for said method and device**

(71) Applicant: KE-BURGMANN A/S, DK-6600 Vejen (DK)
(72) Inventor: Callesen, Benny, 6500 Vojens (DK)
(74) Representative: Elmeros, Claus

(57) **Abstract**

The invention concerns a method and a moulding device in which an inner liner (3) of a fluoroplastic foil is used in a vacuum infusion moulding or vacuum assisted pressure process for the manufacture of fibre reinforced composite products in Resin Transfer Moulding (RTM) process. By this method and this moulding device, a simple closed moulding technique is provided, which is cost efficient, as the backing foil is reusable.

## Description

The present invention relates to a method and a moulding device for the manufacture of composites in a closed mould process, whereby a product moulding volume is defined between a first and a second mould part and the moulding volume is in fluid contact to at least one moulding material reservoir and a vacuum source, whereby the moulding material is drawn into the moulding volume when vacuum is applied to the moulding volume and a method where the resin is injected by pressure and assisted by vacuum in the mould.

In particular in relation to the production of larger composite products, such as glass fibre mouldings, e.g. boats, cabins, etc., it is known common to use a so-called open moulding, where the glass fibre is laid down in a female moulding form part and the moulding material, i.e. the resin is dispensed into and distributed in the form. The moulding process is extensively manual; the glass fibre mats is laid out by hand and the resin is sprayed or rolled into the form.

This "open moulding" process is very labour-intensive and very time-consuming. Moreover, this process requires an extensive use of protective equipment and climate control installations in the production facility in order to protect the workers from the serious health hazards will otherwise be exposed to due to the toxic resins and other materials involved in the process. Thus, from an environmental perspective this method is unattractive. This method is mainly used for single or small-scale product mouldings and for the production of large products.

When moulding in particular relative big or medium-sized fibre reinforced composite products, a technique is known where a normal female mould is modified for a so-called vacuum foil infusion process or a "closed moulding" process. According to this technique, a vacuum foil is provided in the back of the form. This foil acts as a male form part in the mould. The foil is sealed with the form part around the flanges after the glass is laid out in the first form part. A resin supply channel is provided so the resin is drawn into the form when a vacuum is applied to the moulding volume between the first (female) form part and the foil. This method is often referred to as resin transfer moulding process or RTM.

The advantage of the "closed moulding" technique reduces the manual work involved in the actual moulding, which is advantageous from an environmental point of view as well as from an economical point of view.

However, this "closed moulding" vacuum foil technique possesses various drawbacks. The foils are rarely reusable and must be disposed of after each moulding. This is expensive in particular in relation to the production of larger products. The foil including the sealing members and the supply tubing in connection with the foil must be disposed of and destructed after use. This is both expensive in relation to the use of new foils but also with respect to the waste management as these disposed foils, etc. contains remains of toxic materials and must therefore be handled with great care during the disposal.

Moreover, the foil technique demands an extensive preparation time as a new foil, a new sealing must be provided before every moulding. In addition, the fitting of the foil to the female moulding part is time-consuming and must be done with great accuracy. The foils may be difficult to adapt to comers, edges, and other similar shapes in an actual form part. The foils are further disadvantageous in that they are mechanically weak and sensitive to high temperature. In uneven form parts with highly irregular and/or discontinuous surfaces, the foil may wrinkle in comers and bends and the like in the form. This increases the risk of leaks in the foil during the application of vacuum and accordingly, the risk of having to refuse products, which do not pass the quality control and must be disposed of.

In some cases heating process may be carried out in connection with some moulding in order to cure the moulded product in the form, the foils cannot be used if there is a risk of melting the foil at the elevated temperature.

An alternative to the vacuum foil is known from French patent No. FR-A-1.240.024. In FR-A-1.240.024, the problem that the foil cannot be reused is addressed. Accordingly, the solution disclosed in the FR'024 is a variant of the "closed moulding" technique, in which a rigid or semi-rigid male part is provided instead of the foil. The advantage of this solution is that it fits the mould and solves the problem of reusability and mechanical strength. Such a rigid moulding part (back form) is typically made of glass fibre reinforced laminates, which is moulded in the desired shape.

However, the rigid or semi rigid back form possesses certain drawbacks. It demands high skills to manufacture the mould form, which in turn implies high costs for the manufacture. Moreover, due to the relatively high weight of the back mould part (typically a male form part) limits the size of the products that can be moulded in this rigid closed process.

In comparison with the vacuum foil technique, a semi-rigid back form part may reduce the scale of the problem with distribution of the resin, which is drawn into the moulding volume when vacuum is applied. However, another problem with the vacuum infusion technique is to ensure that the resin, which is drawn into the moulding volume, is that dry spots may occur if the resin is unevenly distributed in the mould. A translucent foil could be used (but not reused), whereas with a rigid form part, there is no possibility to monitor the infusion process and check if the resin distributes evenly in the moulding volume. These flow problems are addressed in international patent application No. WO 00/71329. However, the semi-rigid foil structure comprising a multi-layers of films described in the solution in this disclosure is not translucent and posses serious disadvantages with respect to the flexibility of the foil. Thus this semi-rigid foil structure in WO'329 is comparable to the rigid back form discussed above.

Other similar moulding techniques and particular solutions to various problems concerning the vacuum infusion technique are known from the British patents GB 903,986 and GB 1,008,136.

Besides the above-mentioned problems with the known vacuum infusion techniques, each of the form part or parts, depending on which type of moulding technique is used, must be cleaned with certain intervals before it can be reused. The form parts must also be provided with release agents in order to make sure that the moulded product can slip out of the form parts after the moulding

It is an object of the invention to provide a method and a moulding device for closed moulding, which overcome the disadvantages related to the vacuum foil technique and the disadvantages related to the (semi) rigid moulding technique. In particular, it is an object to provide a vacuum infusion technique or vacuum assisted moulding for RTM where the "back form" is reusable and which is suitable for moulding large fibre reinforced composite products.

These objects are achieved by a method and a moulding device for the manufacture of reinforced composites in a closed mould process, whereby a product moulding volume is defined between a first and a second mould part and the moulding volume is in fluid contact to at least one moulding material reservoir and a vacuum source, whereby the moulding material is drawn into the moulding volume when vacuum is applied to the moulding volume, wherein the first mould part comprises an inner liner of a pre-shaped, flexible modified fluorinated plastic foil and wherein the mould parts are clamped together before vacuum is applied and detached again when the moulding volume is filled and the moulding and curing process is over, so that the moulded member may be removed and the mould is ready for repeating the moulding process.

By the invention it is realised that the advantages associated with the vacuum foil technique may be obtained without inhering the disadvantages associated therewith, by using a pre-shaped fluoroplastic foil as inner liner in the closed moulding process. Hereby, a reusable foil is provided and a foil to which the resins and accordingly the moulded product does not stick to. This means that the deforming of the moulded product is easier and the mould form part as well as the foil is reusable with only a minimal or even without cleaning and without use of cleaning agents in between two mouldings. By using a foil in a modified fluorinated plastic material, a heat resistant foil is provided which can withstand the heat that may be developed during the moulding process, just as this feature makes the vacuum foil moulding process according to the invention suitable for composite mouldings where subsequent or simultaneous heat treatment is required or desired. By using a fluoroplastic foil in a method according to the invention, a both pre-shaped and flexible inner liner is provided, which is suitable for adaptation to corners and bends in the surface of the mould form.

By the moulding device to the invention, the inner liner having a low weight is provided, which makes the closed moulding method according to the invention particularly suitable for the manufacture of large products.

Preferably, a fluoroplastic, laminated foil is used for the method and the moulding device according to the invention, preferably a laminated foil with a thickness of 0.05 to 1.5 mm, which can be assembled in small or big panels suited to the products to be moulded. Moreover, the inner liner is pre-shaped in a flexible flouro plastic laminate so that it corresponds to the shape of the product to be moulded. Hereby, a foil with a high mechanical strength is provided. By using a foil laminate, the foil may be designed according to relevant process strength and flexibility requirements deriving from e.g. the specific product size, the shape of the mould, etc. Moreover, by using a laminated fluoro plastic Teflon foil, the impermability of the inner liner may be ensured and accordingly, a good even distribution of the resin by the vacuum infusion is achieved. Furthermore, by providing a laminated foil, a high tear resistance of the inner liner is obtained.

Another advantage of using the laminated foil is that it is possible to adapt the shape of the foil, in particular the shape of details of the shape of the foil, e.g. if the shape of the moulding has to be changed. This feature is particularly advantageous in relation to the moulding of prototypes.

The foils in the laminate preferably consists of at least two, preferably three layers of fluoroplastic material, selected from a group consisting of PFA (perfluoro alkoxy), FEP (Fluorinated ethylene propylene, TFE (tetra flour ethylene), ETFE (ethylene tetra flour ethylene), ECTFE (ethylene chloride triflour ethylene) and TFM. Also extruded films in PFA (perfluoro alkoxy), FEP (Fluorinated ethylene propylene, TFE (tetra flour ethylene), ETFE (ethylene tetra flour ethylene), ECTFE (ethylene chloride triflour ethylene), TFM, PTFE (modified poly tetra fluor ethylene) and similar products may be used.

According to the typical use of the invention, the first mould part, i.e. the inner liner is a female mould part and the second mould part is a male mould part. Hereby, the flexible, pre-shaped inner liner foil may be drawn into the other form mould part as vacuum is applied. According to another embodiment of the invention, the inner liner may be provided with an airbag in a predetermined shape, which is shaped correspondingly to the flexible inner liner and placed directly behind the flexible inner liner in another mould part. Before the moulding process is started, a glass fibre mat is placed over the inner liner which in turn is placed over the airbag, which is then inflated so it fills out the space inside the other mould part and puts the inner liner and the fibre reinforcement in place relative to the other mould form part. Hereby, composite products with relative complex shapes may be manufactured in a simple moulding device. According to this embodiment of the invention moulding form parts with otherwise interlocking shapes may be produced, as the airbag is deflated again after the vacuum infusion moulding has taken place. Two or more form parts may of course make up the mould part corresponding to the mould form part formed by the inner liner provided with the airbag.

Reinforcement fibre materials, such as a glass fibre mat or other reinforcement fibres, e.g. carbon fibres or the like, are provided in the moulding volume prior to the assembly of the first and second mould parts. The reinforcement fibre mat provides the necessary spacing between the foil and the second mould part, and the resin may be drawn into the moulding volume since the fibre mat is porous.

In a first embodiment of the laminate according to the invention, the inner surface of the foil is smooth. In another embodiment, the inner surface of the foil is structured. By the term inner surface is meant the surface of the inner liner facing towards the moulding volume.

In a preferred embodiment of the invention, the inner liner is translucent. Hereby, it is possible to visually monitor the closed vacuum infusion process while it is going on.

In an embodiment of the invention, the mould part are assembled and since the structured surface of the foil allows a flow of air to be transported towards the vacuum outlet of the moulding volume, vacuum is applied and gelcoat is drawn into the mould, after cure the mould is opened before the reinforcement fibres are provided and the mould is reassembled and closed moulding process is executed. Hereby, a closed method of applying gelcoat or similar surface in the mould is provided. This is otherwise done by manually spraying or painted the gelcoat into the form prior to laying down the glass fibres into the form. Thus, according to this embodiment of the invention, a dual function is provided in the moulding process and by the moulding device according to the invention. By the invention it is furthermore realised that if a certain thickness of the gelcoat is wanted, the closed gelcoat application process may be repeated as often as necessary.

This procedure is also possible using vacuum assisted pressure injection, i.e. where the resin source is pressurised and supplied into the moulding volume under a certain pressure.

In a preferred embodiment of the invention, the first and second mould parts are assembled over an annular airtight sealing member encompassing the moulding volume carrying the inner liner, thus said airtight sealing member belonging to the second mould part, which may be clamped onto the first mould part. Moreover, the sealing comprises two annular sealing members defining an annular sealing volume around the moulding volume, and vacuum is applied to this annular sealing volume. Advantageously, the vacuum in the sealing volume is larger than the vacuum in the moulding volume during the vacuum forming process. According to these embodiments of the invention, permanent sealing members are provided in the mould part carrying the foil. In particular by providing two "concentric" sealing members defining a sealing volume encompassing the moulding volume, an extra safety is built into the process, as an airtight sealing between the mould parts is ensured. Moreover, when the vacuum applied to the sealing volume is greater than the vacuum in the moulding volume, possible problems concerning airtightness during the filling of the edge regions in the moulding volume. The sealing volume may serve a secondary function of accumulating any surplus of resin, which is pressed through the inner sealing member during the last stage of the resin filling of the moulding volume.

The invention is in the following described in detail with reference to the accompanying drawings, in which:
- Fig. 1: is a schematic cross-sectional view of a closed moulding process according to an embodiment of the invention;
- fig. 2: is a schematic view of a second embodiment of the invention;
- fig.3: is a schematic cross-sectional view of a third embodiment of the invention; and
- fig. 4: is a schematic cross-sectional end view of a fourth embodiment.

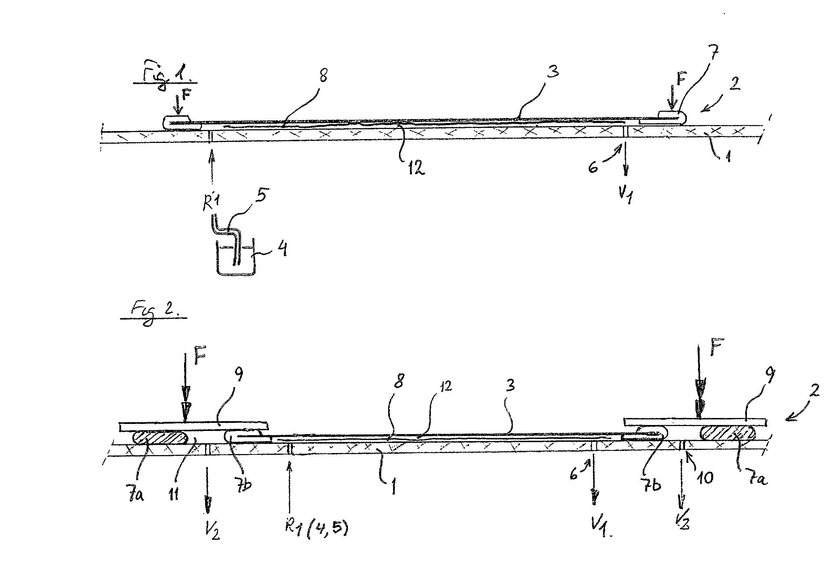

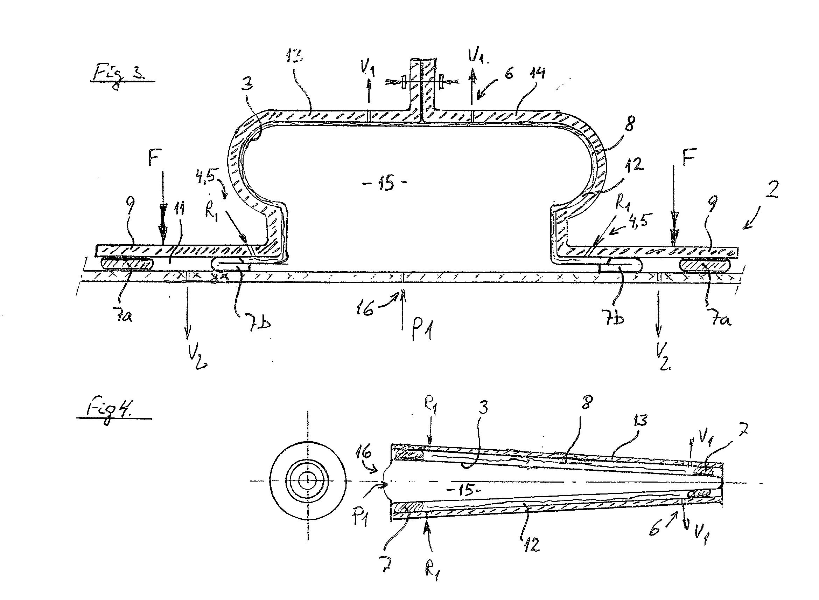

In figure 1 is shown a schematic example of a simple layout of a closed moulding process according to the invention. A first moulding part 1, which may be a planar substrate, when the product to be moulded is planer, as it is the case in the example shown in fig. 1 and fig. 2. A second mould part 2 is positioned on the first mould part 1. The second moulding part 2 comprises an inner liner 3 consisting of a laminated foil comprising of two or more layers of fluoroplastic films laminated together. Between the first mould part 1 and the second mould part 2, a moulding volume 12 is created. In this space, a reinforcing glass fibre fabric 8 is positioned prior to the assembly of the two mould parts 1, 2. Around the edges of the inner liner 3, an annular sealing member 7 is provided. The inner liner 3, i.e. the second moulding part 2 is clamped together with the first moulding part 1 by clamping means exercising a force F on the sealing member 7 which thereby is pressed towards the receiving surface of the first mould part 1 so that an airtight seal of the moulding volume 12 is provided.

In either the first moulding part 1, such as shown in fig. 1, or alternatively in the second part 2, a vacuum connection 6 is provided adapted to exercising a vacuum in the moulding volume 12. At a suitable distance from said vacuum connection 6 is provided a resin supply tube 5, which is in fluid connection to a resin source 4, from which a resin flow R₁ is provided and resin is drawn into the moulding volume 12 when vacuum V₁ is applied. The reinforcing fibres 8 in the moulding volume 12 provides a spacing between the foil inner liner 3 and the first moulding part 1 when the vacuum is applied, so that the moulding volume 12 does not collapse. Since the fibre fabric 8 is porous, the vacuum V₁ is applied to the entire moulding volume 12 and is therefore gradually filled with resin, which is drawn into the mould and flows towards the vacuum source 6.

The inner liner 3 is a laminated foil of PTFE, PFA or similar fluoroplastic films in order to provide sufficient strength and ensure impermability. The inner liner 3 is highly flexible but is preferably pre-shaped so that it fits the form of the first moulding part 1. The laminated foil 3 is preferably made translucent so that the vacuum infusion of the resin can be monitored and potential "dry spots", i.e. spots where the resin does not fill the moulding volume 12 may be repaired. Dry spots may occur e.g. if two glass mats 8 overlap and creates a flow resistance to the resin. Any imperfection in the resin distribution may be manually repaired afterwards, since the exact location of such can be identified during the monitoring of the process.

The sealing between the two moulding parts 1, 2 may advantageously be made as exemplified in figure 2, where an outer sealing member 7a and an inner sealing member 7b is provided in the rim flanges of the second moulding part 2. The two sealing members 7a, 7b encompass the entire moulding volume 12. Between the two annular sealing member 7a, 7b a vacuum chamber 11 is created. This sealing vacuum chamber 11 is connected to a vacuum source 10. The vacuum V₂ applied to the sealing chamber 11 is greater than the vacuum V₁ applied to the moulding volume 12. By sealing the two moulding parts 1, 2 by this dual sealing assembly, the two moulding parts 1, 2 may in some embodiments be held firmly together even without the aid of the clamping means 9.

Figure 3 shows an embodiment of a more complex design of a closed moulding process. In this embodiment, an airbag 15 is provided in the first moulding part 1, which is inflatable via a pressurised air P₁ from a pressurised air supply 16 directing a flow of pressurised air P₁ into the airbag 15. This air bag 15 may be an insert component or alternatively constituted by the inner liner 3 itself exploiting that the inner liner 3 is flexible and impermeable. In this embodiment, a backing form 13, 14 is provided, which is an assembly of two or more form parts 13, 14. Between the backing form 13 and the inner liner 3 a moulding volume 12 is provided in which one or more reinforcing fibre fabrics 8 are provided. The resin inlet flows R₁ are suitably positioned relative to the vacuum openings 6 which are also positioned so that vacuum V₁ is applied to the entire moulding volume 12. In this embodiment, both the vacuum openings 6 and the resin inlet flows R₁ are arranged in the second mould form 2. The dual sealing utilising two sealing members 7a, 7b are preferably used and a second vacuum V₂ is applied to the sealing volume 11. The second mould part 2 may preferably be provided with annular clamping flanges 9 for clamping the two moulding parts 1, 2 together.

In figure 4, another embodiment of a moulding device is shown, by which a conical elongated composite product made be produced. According to this embodiment, the backing form 13 is conical and encompasses the entire moulding volume 12. An airbag 15 and a fluoroplastic inner liner 3 are inserted into the "backing" outer form 13. Between the backing form 13 and the inner liner 3 a moulding volume 12 is provided in which one or more reinforcing fibre fabrics 8 are provided. At each end of the form 13, sealing members 7 are put in place. Vacuum V₁ is applied at one end, and a resin inlet flow R₁ is provided at the other end to draw the resin into the moulding volume 12.

## Claims

1. A method of manufacture of reinforced composite products in a closed mould process, whereby a product moulding volume is defined between a first and a second mould part and the moulding volume is in fluid contact to at least one moulding material reservoir and a vacuum source, whereby
the moulding material is drawn into the moulding volume when vacuum is applied to the moulding volume, wherein the first mould part comprises an inner liner of a pre-shaped, flexible modified fluorinated plastic foil and wherein the mould parts are clamped together before vacuum is applied, and
the mould parts are detached from each other when a predetermined amount of resin is filled into the moulding volume, so that the moulded composite product may be removed and the mould is ready for repeating the moulding process.

2. A method according to claim 1, whereby the first mould part is a female mould part and the second mould part is a male mould part.

3. A method according to claim 1 or 2, whereby reinforcement fibre material are provided in the moulding volume prior to the assembly of the first and second mould parts.

4. A method according to any of the claims 1 to 3, whereby the reinforcement material is a glass, stone, ceramic, carbon, organic and synthetic fibre fabric.

5. A method according to any of the preceding claims, whereby the inner surface of the foil is smooth.

6. A method according to any of the claims 1 to 4, whereby the inner surface of the foil is structured.

7. A method according to claim 6, whereby the mould part are assembled and since the structured surface of the foil allows a flow of air to be transported towards the vacuum outlet of the moulding volume, vacuum is applied and gelcoat is drawn or injected into the mould, after curing the mould is opened before the reinforcement fibres are provided and the mould is reassembled and closed moulding process is executed.

8. A method according to any of the preceding claims, whereby the inner liner is translucent.

9. A method according to any of the preceding claims, whereby the first and second mould parts are assembled over an annular airtight sealing member encompassing the moulding volume carrying the inner liner, thus said airtight sealing member belonging to the second mould part, which may be clamped onto the first mould part.

10. A method according to claim 9, whereby the sealing comprises two annular sealing members defining an annular sealing volume around the moulding volume, and vacuum is applied to this annular sealing volume.

11. A method according to claim 10, whereby the vacuum in the sealing volume is larger than the vacuum in the moulding volume during the vacuum forming process.

12. A method according to any of the preceding claims, whereby the foil is a fluoroplastic laminated foil, preferably with a thickness of 0.05 to 1.5 mm, which can be assembled in small or big panels suited to the products to be moulded.

13. A method according to any of the preceding claims, whereby prior to the moulding process is initiated, a reinforcement fibre mat is placed over the inner liner which in turn is placed over the airbag, which is then inflated so it fills out the space inside the other mould part and puts the inner liner and the fibre reinforcement in place relative to the other mould form part.

14. A method according to any of the preceding claims, whereby the moulding material is supplied into the moulding volume under pressure using vacuum assisted pressure injection.

15. A moulding device for the manufacture of composites in a closed mould process, whereby a product moulding volume is defined between a first and a second mould part and the moulding volume is in fluid contact to at least one moulding material reservoir and a vacuum source, whereby the moulding material is drawn into the moulding volume when vacuum is applied to the moulding volume, wherein the first mould part comprises an inner liner of a pre-shaped, flexible modified fluorinated plastic foil and wherein the mould parts are clamped together before vacuum is applied and detached again when the moulding volume is filled and the moulding process is over, so that the moulded member may be removed and the mould is ready for repeating the moulding process.

16. A moulding device according to claim 15, wherein the first mould part is a female mould part and the second mould part is a male mould part.

17. A moulding device according to claim 15 or 16, wherein reinforcement fibre material are provided in the moulding volume prior to the assembly of the first and second mould parts.

18. A moulding device according to any of the claims 15 to 17, wherein the reinforcement material is a glass stone, ceramic, carbon, organic and synthetic fibre fabric.

19. A moulding device according to any of the claims 15 to 18, wherein the inner surface of the foil is smooth.

20. A moulding device according to any of the claims 15 to 18, wherein the inner surface of the foil is structured.

21. A moulding device according to any of the claims 15 to 20, wherein the inner liner is translucent.

22. A moulding device according to any of the claims 15 to 21, wherein the foil is a laminate consisting of at least two, preferably three layers of fluoroplastic material, selected from a group consisting of PFA (perfluoro alkoxy), FEP (Fluorinated ethylene propylene, TFE (tetra flour ethylene), ETFE (ethylene tetra flour ethylene), ECTFE (ethylene chloride triflour ethylene) TFM (modified polytetrafluoroethylene) and virgin PTFE (polytetrafluoroethylene).

23. A moulding device according to any of the claims 15 to 21, wherein the foil is a extruded plastified fluoroplast, selected from a group consisting of PFA (perfluoro alkoxy), FEP (Fluorinated ethylene propylene, TFE (tetra flour ethylene), ETFE (ethylene tetra flour ethylene), ECTFE (ethylene chloride triflour ethylene) TFM (modified polytetrafluoroethylene) or similar materials.

24. A moulding device according to any of the claim 15 to 23, wherein the first and second mould parts are assembled over an annular airtight sealing member encompassing the moulding volume carrying the inner liner, thus said airtight sealing member belonging to the second mould part, which may be clamped onto the first mould part.

25. A moulding device according to claim 24, wherein the sealing between the first and second mould part comprises two annular sealing members defining an annular sealing volume around the moulding volume, and vacuum is applied to this annular sealing volume.

26. A moulding device according to claim 25, wherein the vacuum V₁ in the sealing volume is larger than the vacuum V₁ in the moulding volume during the vacuum forming process.

27. A moulding device according to any of the claims 15 to 26, wherein the inner liner is pre-shaped so that it corresponds to the shape of the product to be moulded.

28. A moulding device according to any of the claims 15 to 27, whereby the foil is a fluoroplastic laminated foil, preferably with a thickness of 0.05 to 1.5 mm, which can be assembled in small or big panels suited to the products to be moulded.

29. An inner liner for a vacuum infusion moulding process for the manufacture of fibre reinforced composite products, whereby a product moulding volume is defined between the inner liner, constituting a first mould part and a second mould part and the moulding volume is in fluid contact to at least one moulding material reservoir and a vacuum source, and where the moulding material is drawn into the moulding volume when vacuum is applied to the moulding volume, wherein the inner liner is a pre-shaped, flexible modified fluorinated plastic foil.

30. An inner liner according to claim 29, wherein the laminate consists of at least two, preferably three layers of fluoroplastic material, selected from a group consisting of PFA (perfluoro alkoxy), FEP (Fluorinated ethylene propylene, TFE (tetra flour ethylene), ETFE (ethylene tetra flour ethylene), ECTFE (ethylene chloride triflour ethylene) TFM (modified polytetrafluoroethylene) and virgin PTFE (polytetrafluoroethylene).
